# EUROPEAN PATENT SPECIFICATION

(11) **EP 1 626 826 B1**
(45) Date of publication and mention of the grant of the patent: **28.04.2010**
(21) Application number: 04733231.7
(22) Date of filing: 14.05.2004
(51) Int. Cl.: B21D 39/02

(54) **METHOD FOR MANUFACTURING A PANEL-SHAPED COMPONENT, AND A BODY COMPONENT**
VERFAHREN ZUR HERSTELLUNG EINER PLATTENFÖRMIGEN KOMPONENTE UND KAROSSERIEKOMPONENTE
PROCEDE DE FABRICATION D'UN COMPOSANT EN FORME DE PANNEAU ET D'UN COMPOSANT DE CARROSSERIE

(30) Priority: 19.05.2003 SE 0301432
(43) Date of publication of application: 22.02.2006
(73) Proprietor: VOLVO LASTVAGNAR AB, 405 08 Göteborg (SE)
(72) Inventor: BANG, Edward, S-426 54 Västra Frölunda (SE); SVEDBERG, Jonas, S-416 79 Göteborg (SE)
(74) Representative: Fröhling, Werner Otto
(86) International application number: PCT/SE2004/000759
(87) International publication number: WO 2004/101315

(56) References cited:
- EP-A1- 0 976 519
- EP-A1- 0 995 514
- EP-A2- 0 919 308
- DE-A1- 3 238 651
- DE-A1- 10 130 726
- US-A- 5 487 803
- US-B1- 6 180 199
- PATENT ABSTRACTS OF JAPAN vol. 008, no. 104 16 May 1984 & JP 59 016631 A (TOYOTA JIDOSHA KOGYO KK) 27 January 1984
- DATABASE WPI Week199503, Derwent Publications Ltd., London, GB; Class A32, AN 1995-018930, XP002980953 & JP 06 305329 A (AISHIN KAKO KK) 01 November 1994
- DATABASE WPI Week198435, Derwent Publications Ltd., London, GB; Class A95, AN 1984-217000, XP002980954 & JP 59 128 064 A (SAN STAR GIKEN KK) 24 July 1984

## Description

### TECHNICAL FIELD:

The present invention relates to a method for manufacturing a panel-shaped component such as a door, hatch, hood, cover plate, panel or the like, said panel-shaped component comprising a first panel element and a second panel element (see for example EP-A-0 919 308).

The invention also relates to a body component such as a door, hatch, hood, cover plate or the like for a motor vehicle, which body component comprises a first, inner panel element and a second, outer panel element.

### PRIOR ART:

Contemporary motor vehicles, for example passenger cars, buses and heavy-duty trucks, are normally made up of a body structure comprising a plurality of panels and similar elements, for example in the form of hatches, doors, cover panels, hoods and the like. Such panel-shaped components can be mounted at various positions on the body structure of a vehicle. Such panel-shaped components for vehicles are usually manufactured in the form of a laminate like construction which, according to the conventional art, comprises an outer panel element and an inner panel element. For example, it is previously known to utilize a construction in which the outer and inner panel elements are made of metal. Such a construction can then be formed with the necessary rigidity and strength for the particular application.

One problem with the above construction is, however, that it is heavy. Moreover, the inner panel element, in particular, can be difficult to shape if it is in metal, especially in terms of a configuration involving, for example, sharp edges or deep recesses in the finished product.

As a result of the aforementioned drawbacks, panel components manufactured from an outer panel element in steel plating, but with an inner panel element in a suitable plastics material, have become increasingly common in recent years. There is then a desire to utilize a metal outer panel element in order to give the whole of the body structure a uniform-looking surface. The inner, plastics panel element is in this case expediently glued to the outer panel element, the finished product being given a suitably tailored rigidity and strength for the particular application. The use of a plastics inner component allows the weight of the finished product to be considerably reduced.

One problem with such a panel-shaped component consisting of an outer steel part and an inner plastics part follows from the plastics part normally having to be glued to the plate part, which is a joining process which is both laborious and messy and expensive.

Patent document EP 976519 shows a method for joining together a plastics part and a plate-shaped reinforcing part, the reinforcing part being perforated at certain positions so that tabs or strips of material are formed. After this, the two parts are joined together by said tabs being pressed into the plastics material.

### ACCOUNT OF THE INVENTION:

One object of the present invention is to provide an improved method for manufacturing a panel-shaped component with the aim of offering a simple manufacturing process and of lending high rigidity and strength to said component.

Said object is achieved by means of a method according to claim1.

A further object of the invention is to provide an improved body component for use in motor vehicles.

This object is achieved by means of a body component according to claim 8.

With the invention, a plurality of important advantages are obtained. Above all it can be stated that the invention offers a simple and rational joining together of two panel elements, one panel element being made of plastic and the other panel element being made of metal. The complete panel component can then be made with a low weight, whilst, at the same time, it is lent high rigidity and strength.

The terms "panel-shaped component", "panels" and the like allude in this context to components such as doors, hoods, cover plates, hatches and other substantially plane and plate-shaped components which are employed for use, for example, in motor vehicles.

### DESCRIPTION OF THE FIGURES:

The invention will be described in greater detail below with reference to preferred embodiments and a number of figures, in which:
- figure 1: shows in basic representation a motor vehicle in the form of a truck having an associated panel-shaped element,
- figure 2a: is a cross-sectional view which shows a method for joining together a first element and a second element according to a first embodiment of the invention and in a first state,
- figure 2b: is a cross-sectional view which shows the joining method according to the invention, in a second state,
- figure 2c: is a cross-sectional view which shows the joining method according to the invention, in a third state,
- figure 3: shows a perspective view of a panel-shaped element manufactured according to the invention.

### PREFERRED EMBODIMENTS:

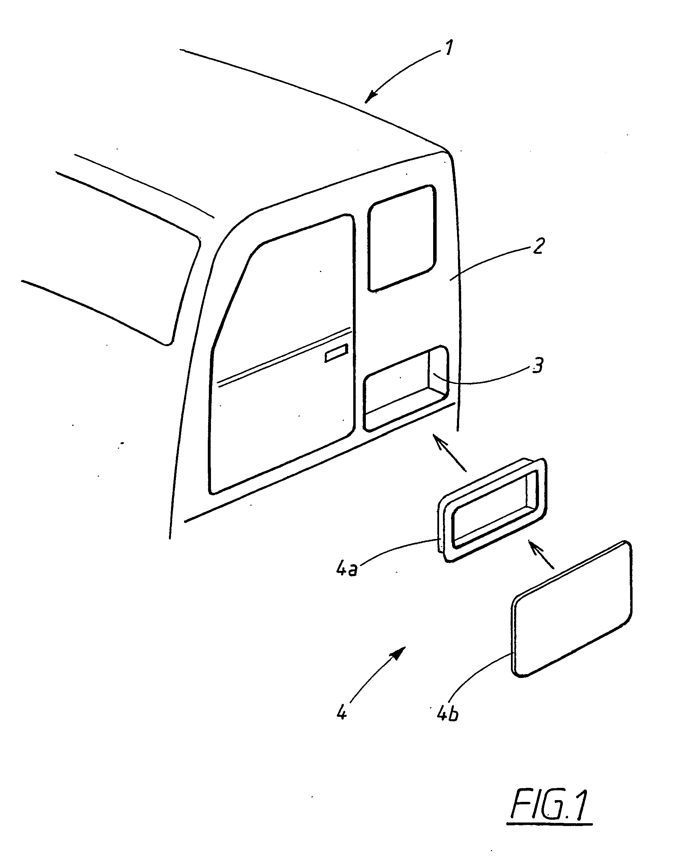

The present invention will be described below in connection with preferred embodiments. With reference to figure 1, a part of a motor vehicle 1 is shown, more specifically in the form of part of a cab of a truck. The motor vehicle 1 comprises a body structure 2 of substantially conventional type. Apart from, for example, doors and windows, the body structure 2 is constructed with hatches, panels and hoods for various purposes. As an example can in this case be cited that the body structure 2 comprises a recess 3, which is intended to be covered by means of a hatch or panel 4, which, in figure 1, is shown in the dismantled state. More specifically, the panel 4 is made up of a first, inner panel element 4a and a second, outer panel element 4b. According to the embodiment, the inner panel element 4a is made of a plastics material, for example a suitable thermoplastic, whilst the outer panel element 4b is constituted by metal, for example steel plating.

Panel-shaped components for use in vehicles are previously known per se. As described in the introduction, such previously known panels are made by gluing the inner plastics element to the outer metal element. The weight of the finished panel can thereby be reduced compared with a construction in which both the inner element and the outer element are made of metal. A process for joining together a plastics element to a metal element by gluing poses certain problems, however, primarily by virtue of it being costly, as well as awkward and messy. For this reason, the invention offers a joining process in which the outer panel element is configured with a seam which is folded around the outer edge of the inner panel element and is then stamped firmly in place. This joining process according to the invention will now be described in detail.

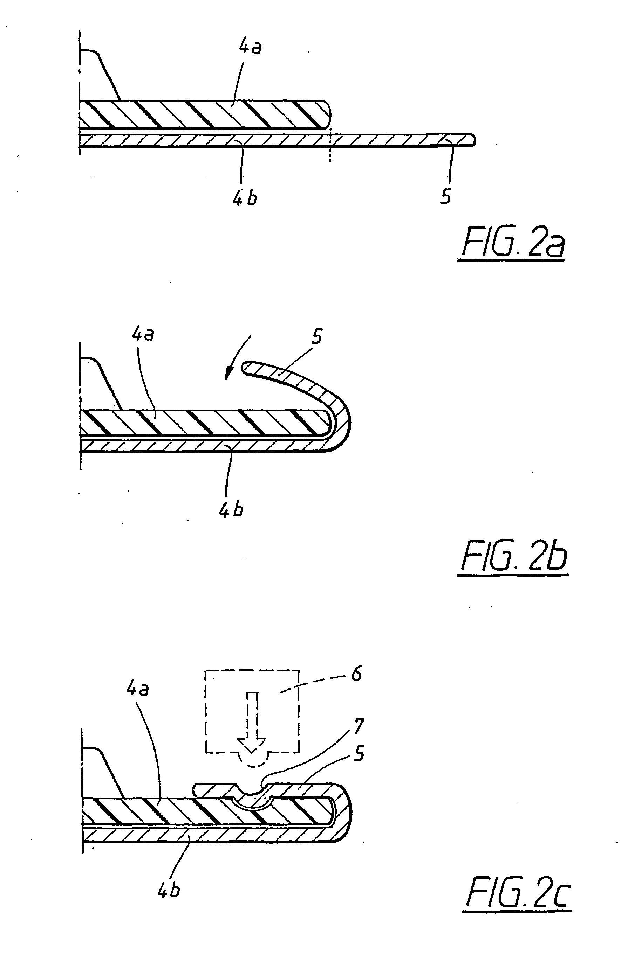

In figure 2a is shown a joining process according to the present invention, in a first state. More specifically, Figure 2a is a cross-sectional view showing a part of the peripheral edge of the inner panel element 4a and outer panel element 4b respectively. The outer panel element 4b has external dimensions which are greater than the external dimensions of the inner panel element 4a, i.e. so that the edge of the outer panel element 4b protrudes somewhat beyond the edge of the inner panel element 4a. A seam 5 is thereby formed along the edge of the outer panel element 4b. The boundary between the seam 5 and the outer panel element 4b is indicated diagrammatically, moreover, by a dashed line in figure 2a.

In the joining together according to the invention, the inner panel element 4a is fitted in relation to the outer panel element 4b in such a way that said outer panel element 4b protrudes at least partially beyond said first panel element, so that the seam 5 is formed. As can be seen from figure 2a, the inner panel element 4a and the outer panel element 4b are then brought together, the seam 5 being folded over so that it is guided toward the opposite side of the inner panel element 4a. The seam 5 is then pressed down against the inside of the inner panel element 4a. This phase is indicated by an arrow in figure 2b.

After the seam 5 has been folded down against the edge of the inner panel element 4a, a stamping or pressing is effected in a plurality of positions along the periphery of the panel 4. This is shown diagrammatically in figure 2c. More specifically, this phase is effected by the use of a pressing tool, indicated diagrammatically by the reference numeral 6 in figure 2c. By acting upon the seam 5 with a high force exerted by the tool 6 (indicated by an arrow in figure 2c), pit-like recesses or dimples will be formed on the inside of the panel 4, i.e. on that side of the panel 4 which, in assembly, is intended to be facing toward the particular vehicle. The cross-sectional view shown in figure 2c reveals such a dimple 7, which is formed along the edge of the panel 4. The dimple 7 is formed, firstly, in the seam 5 and, secondly, in the underlying edge of the inner panel element 4a.

The dimples 7 are given suitable dimensions by a suitably chosen pressure of the tool 6 acting in the direction of the seam 5.

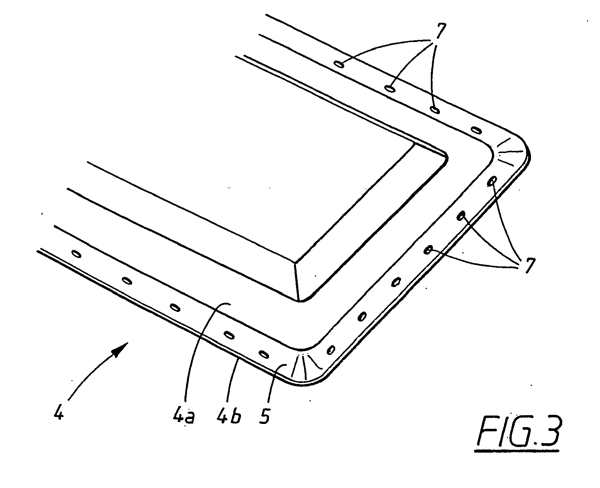

In figure 3, a perspective view is shown of a part of the finished panel 4 described in figure 1 and figures 2a-c. Figure 2c illustrates the panel 4 viewed from its inside, i.e. from that side which, when the panel is mounted on a vehicle, is intended to be facing in toward the vehicle. The panel 4 thus comprises a plastics inner panel element 4a and a metal outer panel element 4b. After the panel elements 4a, 4b have been joined together, a series of dimples 7 of the type shown in figure 2c is formed. Through suitable tailoring of the placement and dimensions of the dimples 7, a complete joined-together structure is obtained which meets stipulated requirements in terms of strength, rigidity and solidity of the ready-made panel 4. The fact that the inner panel element 4 is constituted by a plastics material also means that the finished structure also acquires a relatively low weight.

As stated above, the inner panel element 4a is made of a plastics material. Expediently, a thermoplastic is utilized for this purpose, since it is relatively easy to shape. Other plastics materials are also suitable, however, such as, for example, thermosetting plastics or other plastics materials which have the strength required for a hatch or similar component in a vehicle. According to a variant of the invention, the inner panel element 4a can also be made of a plastics material containing a certain quantity of glass fiber. This gives a greater degree of rigidity and strength and, at the same time, also a greater degree of brittleness, in the inner panel element.

The outer panel element 4b is made of metal, preferably steel or aluminum. Other metals and alloys can also, however, be used within the scope of the invention. Expediently, a thin plate with a thickness within the range 0.2-3 mm is utilized.

The invention is not limited to the above-specified embodiments but can be modified within the scope of the following patent claims.

Expediently, the invention can be utilized for the manufacture of panels and similar elements which are intended to constitute parts of a body structure of a motor vehicle, for example, a heavy goods vehicle. The invention is not, however, limited to being implemented only in respect of motor vehicles, but can also be utilized with other vehicles such as aircraft, and, in general terms, also in other contexts in which the aforementioned manufacturing method is suitable for the manufacture of panel-like elements, for example for refrigerators and freezers and the like.

## Claims

1. A method for manufacturing a panel-shaped component (4) such as a door, hatch, hood, cover plate, panel or the like, said panel-shaped component (4) comprising a first panel element (4a) and a second panel element (4b), wherein said method involves joining together said first panel element (4a) and said second panel element (4b) through the following steps:
the fitting of said first panel element (4a) in relation to said second panel element (4b) so that said second panel element (4b) protrudes at least partially beyond the periphery of said first panel element (4a) and herein forms a protruding seam (5), and
the folding over of said seam (5) over said first panel element (4a), **characterized in that** the method is realized with the first panel-shaped element being constituted by a plastics material and
by the step of forming dimples (7) at predetermined positions along said seam (5) so that the dimples (7) penetrate into the material of said first panel element (4a).

2. The method as claimed in patent claim 1, **characterized in that** the dimples are created by means of stamping.

3. The method as claimed in patent claim 1, **characterized in that** the dimples are created by means of pressing.

4. The method as claimed in patent claims 1-3, **characterized in that** the method is realized with the first panel-shaped element being constituted by a thermoplastic.

5. The method as claimed in patent claims 1-3, **characterized in that** the method is realized with the first panel-shaped element being constituted by a thermosetting plastic.

6. The method as claimed in patent claims 1-5, **characterized in that** the method is realized with the second panel-shaped element being constituted by a metal.

7. The method as claimed in patent claims 1-5, **characterized in that** the method is realized with the second panel-shaped element being constituted by a steel plating.

8. A body component (4) such as a door, hatch, hood, cover plate or the like for a motor vehicle (1), which body component comprises a first panel element (4a) and a second panel element (4b), wherein said second panel element (4b) is configured with dimensions such that, when fitted against said first panel element (4a), it protrudes at least partially beyond the periphery of said first panel element (4a), and in that said second panel element (4b) comprises a seam (5) folded over around said first panel element, **characterized in that** said first panel element (4a) is made of a plastics material and **in that** said seam has dimples (7) formed at predetermined positions along said seam (5) so that the dimples (7) penetrate into the material of said first panel element (4a).

9. The body component as claimed in patent claim 8, **characterized in that** said dimples are formed by stamping.

10. The body component as claimed in patent claim 8, **characterized in that** said dimples are formed by pressing.

11. The body component as claimed in patent claims 8-10, **characterized in that** said first panel element (4a) is made of a thermoplastic.

12. The body component as claimed in patent claims 8-10, **characterized in that** said first panel element (4a) is made of a thermosetting plastic.

13. The body component as claimed in patent claims 8-10, **characterized in that** said second panel element (4a) is made of metal.

14. The body component as claimed in patent claims 8-10, **characterized in that** said second panel element (4a) is made of steel plating.

## Patentansprüche

1. Verfahren zur Herstellung einer verkleidungsförmigen Komponente (4), wie zum Beispiel einer Tür-, einer Heckklappen-, Hauben-, Abdeckungsplattenverkleidung oder dergleichen, wobei die verkleidungsförmige Komponente (4) ein erstes Verkleidungselement (4a) und ein zweites Verkleidungselement (4b) umfasst, wobei das Verfahren die Verbindung des ersten Verkleidungselements (4a) und des zweiten Verkleidungselements (4b) durch folgende Schritte einschließt:
das Anbringen des ersten Verkleidungselements (4a) in Bezug auf das zweite Verkleidungselement (4b), so dass das zweite Verkleidungselement (4b) wenigstens teilweise über den Umfang des ersten Verkleidungselements (4a) vorsteht und hierbei einen vorstehenden Saum (5) bildet, und
das Überfalten des Saums (5) über das erste Verkleidungselement (4a), **dadurch gekennzeichnet, dass** das Verfahren mit einem durch ein Kunststoffmaterial gebildeten ersten Verkleidungselement realisiert wird, und durch den Schritt der Bildung von Vertiefungen (7) an vorherbestimmten Positionen entlang des Saums (5), so dass die Vertiefungen (7) in das Material des ersten Verkleidungselements (4a) eindringen.

2. Verfahren nach Patentanspruch 1, **dadurch gekennzeichnet, dass** die Vertiefungen durch Stanzen erzeugt werden.

3. Verfahren nach Patentanspruch 1, **dadurch gekennzeichnet, dass** die Vertiefungen durch Drücken erzeugt werden.

4. Verfahren nach den Patentansprüchen 1 bis 3, **dadurch gekennzeichnet, dass** das Verfahren mit einem durch ein Thermoplast gebildeten ersten verkleidungsförmigen Element realisiert wird.

5. Verfahren nach den Patentansprüchen 1 bis 3, **dadurch gekennzeichnet, dass** das Verfahren mit einem von einem aushärtbaren Kunststoff gebildeten ersten verkleidungsförmigen Element realisiert wird.

6. Verfahren nach den Patentansprüchen 1 bis 5, **dadurch gekennzeichnet, dass** das Verfahren mit einem durch ein Metall gebildeten zweiten verkleidungsförmigen Element realisiert wird.

7. Verfahren nach den Patentansprüchen 1 bis 5, **dadurch gekennzeichnet, dass** das Verfahren mit einem von einer Stahlplattierung gebildeten zweiten verkleidungsförmigen Element realisiert wird.

8. Karosseriekomponente (4), wie z.B. eine Tür, eine Heckklappe, eine Haube, eine Abdeckplatte oder dergleichen für ein Kraftfahrzeug (1), wobei die Karosseriekomponente ein erstes Verkleidungselement (4a) und ein zweites Verkleidungselement (4b) umfasst, wobei das zweite Verkleidungselement (4b) mit solchen Dimensionen konfiguriert ist, dass es wenigstens teilweise über den Umfang des ersten Verkleidungselements (4a) vorsteht, wenn es gegen das erste Verkleidungselement (4a) angebracht ist, und dass das zweite Verkleidungselement (4b) einen Saum (5) umfasst, der um das erste Verkleidungselement übergefaltet ist, **dadurch gekennzeichnet, dass** das erste Verkleidungselement (4a) aus einem Kunststoffmaterial hergestellt ist, und dass der Saum Vertiefungen (7) aufweist, die an vorherbestimmten Positionen entlang des Saums (5) so angeordnet sind, dass die Vertiefungen (7) in das Material des ersten Verkleidungselements (4a) eindringen.

9. Karosseriekomponente nach Patentanspruch 8, **dadurch gekennzeichnet, dass** die Vertiefungen durch Stanzen gebildet sind.

10. Karosseriekomponente nach Patentanspruch 8, **dadurch gekennzeichnet, dass** die Vertiefungen durch Drücken gebildet sind.

11. Karosseriekomponente nach den Patentansprüchen 8 bis 10, **dadurch gekennzeichnet, dass** das erste Verkleidungselement (4a) aus einem Thermoplast hergestellt ist.

12. Karosseriekomponente nach den Patentansprüchen 8 bis 10, **dadurch gekennzeichnet, dass** das erste Verkleidungselement (4) aus einem wärmeaushärtbaren Kunststoff hergestellt ist.

13. Karosseriekomponente nach den Patentansprüchen 8 bis 10, **dadurch gekennzeichnet, dass** das zweite Verkleidungselement (4a) aus Metall hergestellt ist.

14. Karosseriekomponente nach den Patentansprüchen 8 bis 10, **dadurch gekennzeichnet, dass** das zweite Verkleidungselement (4a) aus Stahlplattierung hergestellt ist.

## Revendications

1. Procédé pour fabriquer un composant en forme de panneau (4), tel qu'une porte, une trappe, un capot, un couvercle, un panneau, ou analogue, ledit composant en forme de panneau (4) comprenant un premier élément de panneau (4a) et un second élément de panneau (4b), dans lequel ledit procédé comprend la liaison dudit premier élément de panneau (4a) et dudit second élément de panneau (4b) par l'intermédiaire des étapes suivantes :
la fixation dudit premier élément de panneau (4a) par rapport audit second élément de panneau (4b) de manière à ce que ledit second élément de panneau (4b) fasse saillie au moins partiellement au-delà de la périphérie dudit premier élément de panneau (4a) et forme ainsi une ligne de soudure faisant saillie (5), et
le pliage de ladite soudure sur ledit premier élément de panneau (4a), **caractérisé en ce que** le procédé est réalisé avec le premier élément en forme de panneau constitué d'un matériau plastique, et
la formation de dépressions (7) dans des positions prédéterminées le long de ladite ligne de soudure (5) de manière à ce que les dépressions (7) pénètrent dans le matériau dudit premier élément de panneau (4a).

2. Procédé selon la revendication 1, **caractérisé en ce que** les dépressions sont créées par l'intermédiaire d'un estampage.

3. Procédé selon la revendication 1, **caractérisé en ce que** les dépressions sont créées par l'intermédiaire d'un pressage.

4. Procédé selon les revendications 1 à 3, **caractérisé en ce que** le procédé est réalisé avec le premier élément en forme de panneau qui est constitué d'une matière thermoplastique.

5. Procédé selon les revendications 1 à 3, **caractérisé en ce que** le procédé est réalisé avec le premier élément en forme de panneau qui est constitué d'une matière plastique thermodurcissable.

6. Procédé selon les revendications 1 à 5, **caractérisé en ce que** le procédé est réalisé avec le second élément en forme de panneau qui est constitué d'un métal.

7. Procédé selon les revendications 1 à 5, **caractérisé en ce que** le procédé est réalisé avec le second élément en forme de panneau qui est constitué d'un placage en acier.

8. Composant de carrosserie (4) tel qu'une porte, une trappe, un capot, un couvercle, ou analogue, pour un véhicule automobile (1), lequel composant de carrosserie comprend un premier élément de panneau (4a) et un second élément de panneau (4b), dans lequel ledit second élément de panneau (4b) est configuré avec des dimensions telles que, lorsqu'il est fixé contre ledit premier élément de panneau (4a), il fait saillie au moins partiellement au-delà de la périphérie dudit première élément de panneau (4a), et en ce que ledit second élément de panneau (4a) comprend une ligne de soudure (5) repliée autour dudit premier élément de panneau, **caractérisé en ce que** ledit premier élément de panneau (4a) est constitué d'un matériau plastique et **en ce que** ladite ligne de soudure présente des dépressions (7) formées dans des positions prédéterminées le long de ladite ligne de soudure (5) de manière à ce que les dépressions (7) pénètrent dans le matériau dudit premier élément de panneau (4a).

9. Composant de carrosserie selon la revendication 8, **caractérisé en ce que** lesdites dépressions sont formées par estampage.

10. Composant de carrosserie selon la revendication 8, **caractérisé en ce que** lesdites dépressions sont formées par pressage.

11. Composant de carrosserie selon les revendications 8 à 10, **caractérisé en ce que** ledit premier élément de panneau (4a) est constitué d'une matière thermoplastique.

12. Composant de carrosserie selon les revendications 8 à 10, **caractérisé en ce que** ledit premier élément de panneau (4a) est constitué d'une matière plastique thermodurcissable.

13. Composant de carrosserie selon les revendications 8 à 10, **caractérisé en ce que** ledit second élément de panneau (4a) est constitué de métal.

14. Composant de carrosserie selon les revendications 8 à 10, **caractérisé en ce que** ledit second élément de panneau (4a) est constitué d'un placage en acier.
